# EUROPÄISCHE PATENTSCHRIFT

(11) **EP 0 415 169 B1**
(45) Veröffentlichungstag und Bekanntmachung des Hinweises auf die Patenterteilung: **30.11.1994**
(21) Anmeldenummer: 90115521.8
(22) Anmeldetag: 13.08.1990
(51) Int. Cl.: H04Q 9/14, H04L 12/56

(54) **Verfahren zum Übertragen von Datentelegrammen**
Method for data transmission
Méthode de transmission de données

(30) Priorität: 01.09.1989 EP 89116205
(43) Veröffentlichungstag der Anmeldung: 06.03.1991
(73) Patentinhaber: SIEMENS AKTIENGESELLSCHAFT, 80333 München (DE)
(72) Erfinder: Herkert, Hans, Dipl.-Ing., D-8021 Hohenschäftlarn (DE); Plachetka, Jürgen, Dipl.-Ing., D-8039 Puchheim (DE)

(56) Entgegenhaltungen:
- AT-A- 364 407
- DE-A- 3 110 614
- FR-A- 2 242 829
- FR-A- 2 309 088
- SIEMENS ZEITSCHRIFT, BD. 49, Nr. 4, 1975, Erlangen, DE; A.V.GRUCHALLA et al:"Fernwirksystem FB40 für Nachrichten-Weitverkehrsnetze mit Anschluss für Meldungsanzeige, Drucker oder Rechner"
- COMPUTER COMMUNICATION REVIEW, Bd. 7, Nr. 1, Januar 1977, New York, US; Seiten 29 - 33; C.A. SUNSHINE: "Source routing in computer networks"

## Beschreibung

Ein derartiges Verfahren und eine solche Schaltungsanordnung sind bereits aus A.v. Gruchalla und H. Herkert: "Fernwirksystem FB40 für Nachrichten-Weitverkehrsnetze mit Anschluß für Meldungsanzeige, Drucker oder Rechner", Siemens Zeitschrift 49 (1975), Heft 4, Seiten 224 bis 228 bekannt.

Die bekannte Schaltungsanordnung arbeitet nach dem Aufruf bzw. Pollingverfahren. In einer derartigen Netzeinheit, in der ein Master über eine Mehrpunktverbindung mehrere Slaves zyklisch abfragt, kann im allgemeinen ein Slave nur antworten, wenn er abgefragt wird. Eine direkte Datenverbindung zwischen Slave und Slave ist deshalb nicht ohne weiteres möglich.

Ferner ist aus der DE 31 10 614 C2 eine Fernwirkeinrichtung bekannt, deren Stationen in zeitlicher Folge Informationen miteinander austauschen. Die Fernwirkeinrichtung enthält mehrere Bereichsnetze mit jeweils einer eigenen Bereichszentrale. Die Adressen der Fernwirktelegramme umfassen mehrere Adressenbereiche. Einer der Adressenbereiche wird jeweils mit der Adresse einer Bereichszentrale und ein weiterer Adressenbereich mit der Adresse einer der Unterstationen belegt. Die Bereichszentralen enthalten jeweils eine Koppeleinrichtung mit zwei miteinander gekoppelten Datenspeichern. Einer oder beide Datenspeicher sind mit einer Einrichtung zur Datenverarbeitung versehen. Je nach Adresse des empfangenen Datentelegramms geben die Datenspeicher Telegramminhalte weiter oder sperren sie.

Auf diese Weise läßt sich erreichen, daß adressierte Datentelegramme von einer Zentrale an Unterstationen von Bereichsnetzen übermittelt werden. Aufgrund des hierarchischen Aufbaus des Fernwirknetzes ergibt sich aus den Teiladressen ein bestimmter Übertragungsweg von der Zentrale zur Unterstation.

Auf diese Weise lassen sich Datentelegramme einer Zentrale an Unterstationen von Bereichsnetzen adressengesteuert übermitteln. In vorteilhafter Weise kann eine Gruppe von Adressen zugleich den Endstellen mehrerer Bereichsnetze zugeteilt sein.

In der bekannten Fernwirkeinrichtung ist allerdings nicht vorgesehen, daß unterstationen miteinander Informationen austauschen.

Aufgabe der Erfindung ist es, ein Verfahren der eingangs genannten Art und eine Schaltungsanordnung zur Durchführung des Verfahrens anzugeben, die es den Slaves einer im Aufrufbetrieb arbeitenden Datenübertragungseinrichtung gestatten, Informationen miteinander auszutauschen.

Gemäß der Erfindung weist das Verfahren zur Lösung der genannten Aufgabe die im kennzeichnenden Teil des Patentanspruchs 1 angegebenen Verfahrensschritte auf. Dabei bestehen die Adressen insbesondere aus Adreßbytes, die in einem Adressenbereich des Datentelegrammes enthalten sind.

Durch die erfindungsgemäßen Maßnahmen ergibt sich der Vorteil, daß die Slaves Informationen miteinander austauschen können, ohne daß die mit dem Aufruf- bzw. Pollingverfahren verbundenen Vorteile verloren gehen. Diese Vorteile bestehen insbesondere in der mit dem Aufrufverfahren verbundenen Sicherheit des Informationsaustausches.

Die Weiterbildung des Verfahrens nach Anspruch 2 hat den Vorteil, daß Slaves verschiedener zu einem Übertragungsnetz zusammengefaßter Netzeinheiten in der genannten Weise miteinander kommunizieren können. Sei der Weiterbildung des Verfahrens nach Anspruch 3 läßt sich in jeder Knotenstelle aus der Adresseninformation leicht ableiten, auf welcher weiteren Übertragungsstrecke das Datentelegramm auf dem vorgesehenen Übertragungsweg ein weiteres Stück übertragen wird.

Die Verfahrensschritte nach Anspruch 4 haben den wesentlichen Vorteil, daß das Übertragungsnetz, über das die Teilnehmerstellen miteinander Informationen austauschen, von beliebiger Struktur sein kann. Insbesondere kann das Übertragungsnetz eine Baumstruktur aufweisen oder ein Maschennetz sein.

Bei einseitig gerichteter Übertragung der Datentelegramme kann die Reihenfolge der vom Datentelegramm zu durchlaufenden Ports in eindeutiger Weise durch die Reihenfolge der Portadressen im Adressenteil des Datentelegrammes angegeben werden. Eine andere Möglichkeit für eine solche eindeutige Zuordnung besteht darin, den Portadressen Ordnungsnummer zuzuordnen, die die Reihenfolge bestimmen.

Antwortet ein Slave auf ein Datentelegramm hin mit einem Antworttelegramm, so kann er aus der Portadreßfolge des empfangenen Telegrammes durch Spiegelung eine Portadreßfolge erzeugen, die der entgegengesetzten Übertragungseinrichtung entspricht.

Die Verfahrensschritte nach Anspruch 5 haben demgegenüber den Vorteil, daß in der antwortenden Teilnehmerstelle die empfangene Portadressfolge nicht gespiegelt bzw. umgestellt zu werden braucht. Es genügt vielmehr, die Richtungsinformation neu zu setzen. Die Richtungsinformation gibt dann den auf dem Übertragungweg liegenden Knotenstellen vor, in welcher Weise aus der empfangenen Zusatzinformation die neue Zusatzinformation zu gewinnen ist.

Man kann im Datentelegramm einen Bereich vorgegebener Länge als Adreßbereich definieren, so daß der Beginn des Datenbereiches festgelegt ist. Im Hinblick auf eine Übertragung möglichst kurzer Datentelegramme wird vorzugsweise ein Adreßbereich variabler Länge in Verbindung mit einer Angabe der Länge bzw. der Grenzen des Adreßbereiches vorgesehen. Eine vorteilhafte Art, das Ende des Adreßbereiches anzugeben, geht aus Anspruch 6 hervor.

Die Verfahrensschritte nach Anspruch 7 gestatten es, die Identifizierung von aktuellen Zieladreßbytes und/oder des letzten Bytes einer Portadressenfolge in einfach realisierbarer Weise vorzunehmen. Insbesondere wird dabei in dem der Portadreßfolge vorangestellten Byte die Ordnungszahl des zu identifizierenden Bytes der Portadreßfolge angegeben.

Bei beidseitig gerichteter Übertragung der Datentelegramme wird dabei eine neue Zusatzinformation zweckmäßigerweise je nach Richtungsinformation durch Inkrementieren oder Dekrementieren der alten Zusatzinformation gewonnen.

Eine zweckmäßige Verfahrensvariante, bei der die Zusatzinformation und/oder die weitere Zusatzinformation in Erweiterungsbits der Portadreßbytes enthalten sind, geht aus Anspruch 8 hervor.

In diesem Falle ist es vorteilhaft, die neue Zusatzinformation je nach Richtungsinformation durch Transponieren zum folgenden oder zum vorangehenden Portadreßbyte der Portadressenfolge zu gewinnen.

Die Weiterbildung des Verfahrens nach Anspruch 9 kommt in vorteilhafter Weise ohne Adreßpointer aus. Die Verfahrensschritte nach Anspruch 10 ermöglichen darüber hinaus auch die Einsparung eines Längenbytes.

Die jeweils in Frage kommende Portadressenfolge ergibt sich aus der Netzkonfiguration und dem gewünschten Übertragungsweg. Zweckmäßigerweise wird in den Teilnehmerstellen eine Tabelle gespeichert, aus der für jede gegebenenfalls anzusprechende weitere Teilnehmerstelle die zugehörige Portadressenfolge hervorgeht.

Dabei kann durch Speicherung alternativer Portadreßfolgen im Falle von Netzstörungen in vorteilhafter Weise ohne weiteres auf Ersatz-Übertragungswege ausgewichen werden.

Die Erfindung wird anhand der in den Figuren dargestellten Ausführungsbeispiele näher erläutert.

Es zeigen:
Fig. 1 eine Netzeinheit für Aufrufbetrieb und
Fig. 2 ein Computerkommunikationsnetz mit Baumstruktur und
Fig. 3 Portadressenfolgen für die Netzeinheit nach Figur 1.

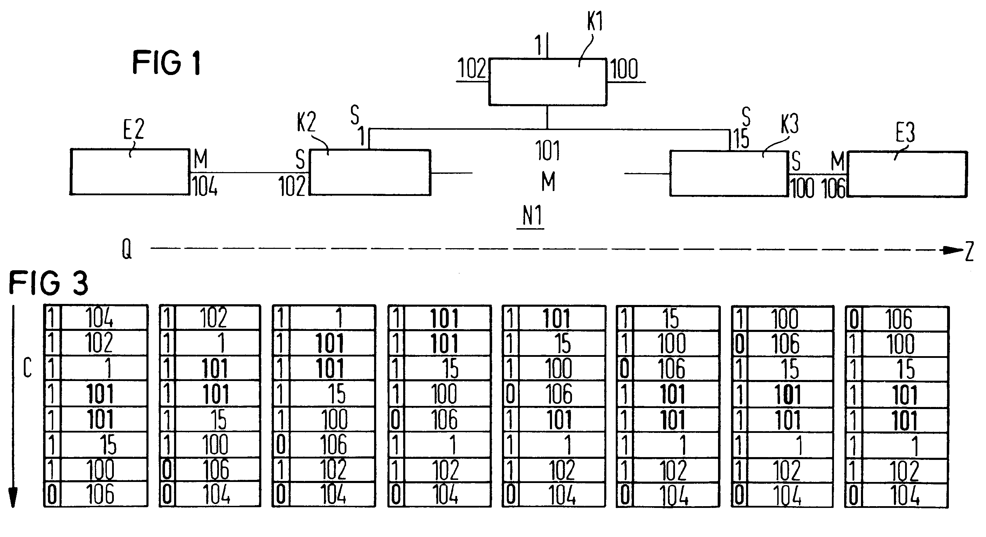

Figur 1 zeigt eine Netzeinheit mit den Knotenstellen K1...K3 und den Endstellen E2 und E3. Die Knotenstelle K1 und die Endstellen E2 und E3 sind jeweils ein Master M. Die Knotenstellen K2 und K3 sind Slaves S, sowohl in Bezug auf die Knotenstelle K1 als auch hinsichtlich der angeschlossenen Endstelle E2 bzw. E3.

Zur Datenübertragung innerhalb der Netzeinheit dient der Adreßpfad C. Dieser Adreßpfad gibt den Übertragungsweg eines Datentelegrammes von der Endstelle E2 zur Endstelle E3 an. Der Adreßpfad enthält als Adresseninformation eine Folge der Portadressen, die sich auf dem Übertragungsweg befinden. Er beginnt mit der Adresse 104 der Endstelle E2. Daran schließen sich die Portadresse 102 der Knotenstelle K2, die Portadresse 1 der Knotenstelle K2, zweimal die Portadresse 101 der Knotenstelle K1, die Portadresse 15 der Knotenstelle K3, die Portadresse 100 der Knotenstelle K3 und die Portadresse 106 der Endstelle E3 an. Dieser Adreßpfad gibt den Übertragungsweg eines Datentelegrammes von der Endstelle E2 zur Endstelle E3 an. Wie man an den zwei gleichen aufeinanderfolgenden Adressen 101 im Adreßfeld C erkennen kann, wird das Datentelegramm am Port 101 der Knotenstelle K1 gespiegelt.

Das beschriebene Verfahren dient zum Übertragen von Datentelegrammen zwischen Teilnehmerstellen einer Datenübertragungseinrichtung. Die Übertragung erfolgt über wenigstens eine Netzeinheit eines Übertragungsnetzes. In der Netzeinheit tauscht eine als Master betriebene Prozessoreinheit über eine Mehrpunktverbindung mit als Slave betriebenen Prozessoreinheiten Informationen aus. Dies geschieht in der Weise, daß in Aufruf- und Antwortzyklen Aufruftelegramme des Masters und Antworttelegramme der Slaves miteinander abwechseln. Die Datentelegramme sind dabei jeweils mit einer Adresseninformation versehen, die im Falle eines Aufruftelegrammes die Adresse des aufgerufenen Slaves und im Falle eines Antworttelegrammes die Adresse des sendenden Slaves enthält.

Bei dem Aufruf- bzw. Pollingverfahren ruft der Master einen Slave mit einem Aufruftelegramm erster Art auf. Der Slave gibt daraufhin eine Antwort ab. Empfängt der Master ein richtiges Antworttelegramm, so ruft er denselben Slave nocheinmal, in diesem Falle jedoch mit einem Aufruftelegramm zweiter Art auf, daß sich hinsichtlich eines vorgegebenen Bits vom Aufruftelegramm erster Art unterscheidet. Mit Hilfe dieses Telegramms wird somit der Empfang des Antworttelegramms quittiert. Empfängt der Master dagegen kein richtiges Antworttelegramm, so sendet er noch einmal ein Aufruftelegramm erster Art aus. Der Slave erkennt daraus, daß sein erstes Antworttelegramm nicht oder nicht fehlerfrei empfangen wurde und gibt noch einmal ein Antworttelegramm ab. Dieser Vorgang kann sich mehrmals wiederholen.

Auf diese Weise ergibt sich - insbesondere in gestörten Übertragungsnetzen - eine besonders große Sicherheit beim gewünschten Informationsaustausch.

Ein von einem Slave zu einem weiteren Slave zu übertragendes Datentelegramm wird jeweils zunächst in einem oder mehreren Schritten als Antworttelegramm an einen Master übertragen, der den beiden Slaves übergeordnet ist. Daran anschließend wird es von dort als Aufruftelegramm in einem oder mehreren Schritten an den anderen Slave gesendet. Die Adresseninformation des vom einen Slave ausgesendeten Datentelegramms enthält zusätzlich zu einer Adresse des sendenden Slaves eine Adresse des Slaves, an dem das Datentelegramm gerichtet ist.

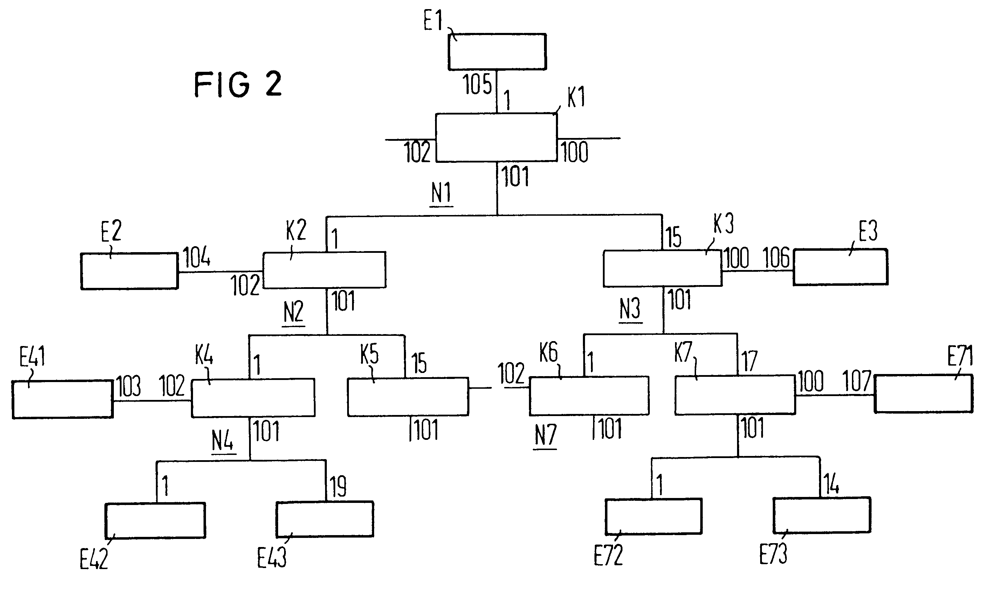

Bei dem Übertragungsnetz nach Figur 2 sind mehrere Netzeinheiten der in Figur 1 gezeigten Art zu einer übergeordneten Netzeinheit zusammengefaßt. Dabei werden in der übergeordneten Netzeinheit die Master der untergeordneten Netzeinheiten zu Slaves, die von einem Master in der übergeordneten Netzeinheit zyklisch abgefragt werden. Sie werden damit auch zu Knotenstellen, die die Informationen aus den untergeordneten Netzeinheiten in die übergeordnete Netzeinheit transportieren.

Auf diese Weise ergibt sich ein hierarchisches Netz. An den Knotenstellen dieses Netzes sind als Endstellen Rechner angeschaltet, die über die Netzeinheiten hinweg Daten austauschen. Bei der Datenübertragung zwischen Endstellen bzw. Rechnern verschiedener Netzeinheiten führt der Weg in eine andere Netzeinheit über eine übergeordnete Netzeinheit. In der übergeordneten Netzeinheit sind die Knotenstellen Slaves, die eine Datenübertragung nur über den abfragenden Master durchführen können. Der Weg eines Datentelegramms von einem Rechner zu einem anderen Rechner, der einer andere Netzeinheit angehört, führt aus der Knotenstelle, an der der Rechner angeschlossen ist, zum Master, der die Knotenstellen abfragt, von dort zum Slave der anderen Knotenstelle und von dort zum anderen Rechner oder über dem Master dieser Knotenstelle in die andere Netzeinheit.

Das Datentelegramm eines Rechners zu einem Rechner einer anderen Netzeinheit wird am Master der übergeordneten Netzeinheit gespiegelt. Diese Spiegelung wird im Adreßpfad der Vermittlungschicht des Datentelegrammes dadurch realisiert, das der Eingangsport an der spiegelnden Knotenstelle zugleich auch der Ausgangsport ist. Im Adreßpfad der Vermittlungsschicht gibt es daher zwei gleiche aufeinanderfolgende Portadressen.

Das in Figur 2 gezeigte Übertragungsnetz hat Baumstruktur. Es enthält die knotenstellen K1...K7 und ist mit den Endstellen E1...E73 abgeschlossen. Die Knotenstellen K1...K7 und die Endstellen E1...E73 sind mit Hilfe von bidirektionalen Übertragungsstrecken miteinander verbunden. Die Knotenstelle K1 ist an der Wurzel des baumförmigen Kommunikationsnetzes angeordnet. Die Ports der Knoten- und der Endstellen sind jeweils mit ihrer Adresse bezeichnet.

An den Port 101 der Knotenstelle K1 sind der Port 1 der Knotenstelle K2 und der Port 15 der xnotenstelle K3 angeschlossen. An den Port 101 der Knotenstelle K2 sind der Port 1 der Knotenstelle K4 und der Port 15 der Knotenstelle K5 angeschlossen. Außerdem ist der Port 101 der Knotenstelle K3 sowohl mit dem Port 1 der Knotenstelle K6 als auch mit dem Port 17 der Knotenstelle K7 verbunden.

Zusätzlich zu den Knotenstellen K2 und K3 können an den Port P101 der Knotenstelle K1 weitere Knotenstellen angeschlossen sein. Ferner können an den Ports 100 und 102 der Knotenstelle K1 jeweils ein oder mehrere, in der Figur nicht dargestellte Knotenstellen angeschlossen werden.

An den Port 1 der Knotenstelle K1 ist der Port 105 der Endstelle E1 angeschlossen.

Ferner ist der Port 102 der Knotenstelle K2 mit dem Port 104 der Endestelle E2, der Port 102 der Knotenstelle K4 mit dem Port 103 der Endstelle E41, der Port 100 der xnotenstelle K3 mit dem Port 106 der Endstelle E3 und der Port 100 der Knotenstelle K7 mit dem Port 107 der Endstelle E71 verbunden.

Am Port 101 der Knotenstelle K4 liegen der Port 1 der Endstelle E42 und der Port 19 der Endstelle E43. Mit dem Port 101 der Knotenstelle K7 sind der Port 1 der Endstelle E72 und der Port 14 der Endstelle E73 verbunden.

Die Knotenstellen sind zweckmäßigerweise Rechner- oder Prozessoreinheiten, die jeweils ein an einem Port empfangenes Datentelegramm zwischenspeichern und daraufhin untersuchen, an welchem Port es auszusenden ist, damit es auf dem gewünschten Übertragungsweg zum Ziel gelangt. Zusätzlich kann eine Plausibilitätskontrolle durchgeführt werden. Schließlich wird das Datentelegramm an dem so ermittelten Port weitergereicht. Die Knotenstellen haben daher die Funktion eines Transitknotens.

Die Endstellen haben als Peripheriegeräte die Funktion eines Endknotens und sind zweckmäßigerweise ebenfalls Rechner- oder Prozessoreinheiten.

Gegebenenfalls können weitere Endstellen Master oder Slave einer Netzeinheit sein, die im Aufrufbetrieb bzw. nach dem pollingverfahren arbeitet. So kann es bei dem in Figur 2 gezeigten Kommunikationsnetz zweckmäßig sein, den Port 103 der Endstelle E41 als Master und den Port 102 der Knotenstelle K4 als Slave und den Port der Endstelle E71 als Master und den Port 100 der Knotenstelle K7 als Slave auszubilden.

Andererseits kann der Port 105 der Endstelle E1 als Master und der Port 1 der Knotenstelle K1 als Slave und der Port 104 der Endstelle E2 als Master und der Port 102 der Knotenstelle K2 als Slave ausgebildet werden.

Die Teilnehmerstellen, die mit Hilfe von Datentelegrammen Informationen miteinander austauschen, können Endstellen und/oder Knotenstellen des Übertragungsnetzes sein. Die Knotenstellen weisen jeweils einen oder mehrere mit dem Übertragungsnetz verbundene Ports auf.

Zum adressengesteuerten Übertragen von Datentelegrammen zwischen den Teilnehmerstellen der Datenübertragungseinrichtung dient ein besonderes Verfahren. Die dabei vorgesehenen Datentelegramme enthalten jeweils eine Adresseninformation, die den Übertragungsweg bestimmt, den die Datentelegramme durch das Übertragungsnetz nehmen.

Den Ports ist jeweils eine Adresse zugeordnet. Die Adresse ist in Figur 1 und in Figur 2 jeweils angegeben. Wie man sieht, haben mehrere Ports von verschiedenen Knoten- bzw. Endstellen die gleiche Adresse, sofern sie nicht unmittelbar miteinander verbunden sind.

Die Vermittlungsschicht in den Datentelegrammen ist insbesondere die OSI-Schicht 3 des bekannten OSI-Modelles. Mit Hilfe der Datentelegramme werden Daten zwischen den Endstellen und/oder Knotenstellen transportiert. Nach den Regeln des OSI-Modells ist im Datentelegramm eine Vermittlungsschicht definiert, die entsprechend Figur 1 den Transportweg des Telegramms von der Quelle Q zum Ziel Z und umgekehrt festlegt.

Jedem Port ist eine Adresse, insbesondere eine Nummer zugewiesen. Jeder Port einer Knotenstelle oder Endstelle, an dem die Datentelegramme ein- und auslaufen, ist daher ansprechbar.

Der Vermittlungsprozeß verwendet die Portadressen als Elemente in der Zieladresse.

Der Adreßpfad der dritten Schicht legt eindeutig den Weg des Datentelegrammes von einer Teilnehmerstelle zur anderen Teilnehmerstelle fest. Er ist durch eine Folge von Portadreßbytes gebildet und gibt die Reihenfolge der Portadressen an, die das Datentelegramm durchlaufen muß, um an das Ziel Z zu gelangen. Man kann vor dem Adreßpfad C eine Längenangabe, insbesondere ein Längenbyte zusammen mit einem Adreßpointer setzen. Der Adreßpointer kann durch ein Erweiterungsbit bzw., E-Bit in den Adreßbytes des Adreßpfades C ersetzt werden.

Die Längenangabe gibt in diesem Fall die Anzahl der Adreßbytes des gesamten Adreßpfades an. Der Adreßpointer zeigt dann auf den aktuellen Zielport. Ist das Umschalt- bzw. U-Bit des Pointers log 1, so wird der nächste Zielport durch Inkrementieren gewonnen. Ist das U-Bit des Pointers log 0, so wird der nächste Zielport durch Dekrementieren des Pointers erhalten. Der Vorteil eines solchen U-Bits liegt darin, daß sich der Adreßpfad eines Antworttelegrammes allein durch Umschalten des U-Bits aus dem Adreßpfad eines Aufruftelegrammes gewinnen läßt.

Gemäß einer ersten Verfahrensvariante kann man die Adresseninformationen mit einem Richtungsbit in einem Adreßpointer und mit einem Längenbyte versehen. Die Vermittlungsschicht bzw. dritte Schicht des OSI-Modells hat dann im Datentelegramm die folgende Struktur:
Längenangabe Adreßpointer Feld für den Zieladreßpfad

In Richtung von der Quelle zum Ziel bzw. in der Vorwärtsrichtung ist das U-Bit des Adreßpointers dann log 1, d. h. der Adreßpointer wird jeweils inkrementiert. Bei der in Figur 1 gezeigten Netzeinheit ergibt sich dann der folgende Ablauf. In der dritten Schicht der sendenden Endstelle E2 zeigt der Adreßpointer mit dem Wert 1 auf die Adresse 104, des Quellen- bzw. Ausgangsports. Die dritte Schicht setzt den Adreßpointer auf 2, der damit auf die Adresse 102, die Eingangsadresse der folgenden Knotenstelle K2 deutet und sendet das Datentelegramm an seinem Quellenport 104 aus. Die dritte Schicht der Knotenstelle K2 macht einen Vergleich zwischen Adreßpointer und Längenangabe. Bei Ungleichheit erhöht sie den Adreßpointer auf 3 und sieht daraus, daß sie das Telegramm an Port 1 aussenden soll. Daraufhin inkrementiert sie den Adreßpointer auf 4, der damit auf die Adresse 101, die Eingangsadresse der nächsten Knotenstelle K1 deutet und sendet das Datentelegramm an Port 1 aus.

Die dritte Schicht der Knotenstelle K1 macht einen Vergleich zwischen Adreßpointer und Längenangabe. Bei Ungleichheit erhöht sie den Adreßpointer auf 5. Daraus sieht sie, daß sie das Datentelegramm an Port 101 aussenden soll. Daraufhin inkrementiert sie den Adreßpointer auf 6, der dann auf die Adresse 15 der Knotenstelle K3 zeigt und sendet das Datentelegramm an Port 101 aus. Die dritte Schicht der Knotenstelle K3 macht einen Vergleich zwischen Adreßpointer und Längenangabe. Bei Ungleichheit erhöht sie den Adreßpointer auf 7. Daraus sieht sie, daß sie das Datentelegramm am Port 100 aussenden soll: Daraufhin inkrementiert sie den Adreßpointer auf 8, der dann auf die Adresse 106 der Endstelle E2 zeigt und sendet das Telegramm am Port 100 aus.

Die dritte Schicht der Endstelle E2 erkennt an der Gleichheit von Adreßpointer und Längenangabe, daß sie das Ziel Z ist und gibt das Datentelegramm an die höheren Schichten weiter. Antwortet die Endstelle E2, so setzt ihre siebte Schicht im Antworttelegramm das gleiche Adreßfeld wie im Abruftelegramm ein und ändert U-Bit des Adreßpointers auf log 0. Beim Durchlaufen der Knotenstellen und Endstellen wird deshalb der Adreßpointer dekrementiert und so kommt das Antworttelegramm wieder zu der Endstelle E1 zurück.

Mit Hilfe des Adreßpointers wird somit eine der in der Portadresseninformation enthaltenen Portadressen nach der anderen in der vorgegebenen Reihenfolge zur aktuellen Zieladresse bestimmt. Diese Zusatzinformation wird jeweils in den auf dem Übertragungsweg liegenden Knotenstellen aktualisiert.

Die Reihenfolge, in der die Portadressen auf dem Übertragungsweg jeweils zur Zielportadresse gemacht werden ist durch eine Richtungsinformation vorgegeben, die der Übertragungsrichtung entspricht und die Portadressenfolge ergänzt.

Gemäß einer zweiten Variante des Verfahrens entfällt das U-Bit im Adreßpointer B und der Adreßpointer wird bei jedem Vermittlungsprozeß grundsätzlich inkrementiert. Hat der Adreßpointer den Wert der Längenangabe, so hat das Datentelegramm sein Ziel Z erreicht.

In der siebten Schicht der Endstelle E2 wird der Adreßpfad C des Antworttelegrammes durch Spiegelung des Adreßpfades C des Abruftelegrammes gewonnen und der Adreßpointer auf log 1 gesetzt.

Bei einer weiteren vorteilhaften Variante des Verfahrens hat die Vermittlungsschicht im Datentelegramm hat die folgende Struktur:
Längenangabe Feld für den Zieladreßpfad

Der Adreßpointer entfällt und wird durch ein Erweiterungs- bzw. E-Bit in den Adreßbytes des Adreßpfades C ersetzt, wobei das E-Bit des letzten Bytes gleich log 0 - das ist die Portadresse der Endstelle E2 - und die E-Bits der anderen Adreßbytes gleich log 1 ist. Bei jedem Vermittlungsprozeß wird das jeweils obere Adreßbyte unter das Adreßbyte geschoben, dessen E-Bit gleich log 0 ist. Die Endstelle E2, die beim Einlesen der Eingangsadresse das E-Bit gleich log 0 im Adreßbyte findet, erkennt, daß sie das Ziel ist und gibt das Datentelegramm an die siebte Schicht weiter. In der 7. Schicht der Endstelle wird der Adreßpfad C des Antworttelegramms dadurch gewonnen, daß das E-Bit des letzten Adreßbytes auf log 0 - das ist die Portadresse der Endstelle E1 - und das E-Bit des ersten Adreßbytes auf log 1 gesetzt wird. Damit ist der Adreßpfad C des Antworttelegrammes definiert.

Aus Figur 3 geht eine besonders vorteilhafte Variante des Verfahrens hervor. Das Längenbyte entfällt und wird durch ein zweites E-Bit mit log 0 ersetzt, wobei das eine E-Bit mit log 0 das Ende des Zieladreßbereiches und das andere E-Bit mit log 0 das Ende Quelladreßbereiches festlegt. Das zweite E-Bit mit log 0 bestimmt gleichzeitig das Ende des Adreßpfades C, so daß das Byte mit der Längenangabe entfällt.

Datentelegramme, mit denen verschiedenen Netzeinheiten angehörende Slaves Informationen miteinander austauschen, werden schrittweise solange als jeweiliges Antworttelegramm zum nächsten übergeordneten Master übertragen, bis ein Master erreicht ist, der beiden Slaves übergeordnet ist. Von dort wird das Datentelegramm schrittweise als jeweiliges Aufruftelegramm von einer Knotenstelle zu einer dieser untergeordneten Knotenstelle bzw. von einer Knotenstelle zum weiteren Slave übertragen.

## Patentansprüche

1. Verfahren zum Übertragen von Datentelegrammen zwischen Teilnehmerstellen einer Datenübertragungseinrichtung über wenigstens eine Netzeinheit eines Übertragungsnetzes, in der eine als Master betriebene Prozessoreinheit über ein Mehrpunktverbindung mit als Slave betriebenen Prozessoreinheiten dadurch Informationen austauscht, daß in Aufruf- und Antwortzyklen Aufruftelegramme des Masters und Antworttelegramme der Slaves miteinander abwechseln, wobei die Datentelegramme jeweils mit einer Adresseninformation versehen sind, die im Falle eines Aufruftelegrammes eine Adresse des aufgerufenen Slaves und im Falle eines Antworttelegrammes mit eine Adresse des sendenden Slaves enthält,
**dadurch gekennzeichnet**,
daß ein von einem Slave zu einem weiteren Slave zu übertragenden Datentelegramm jeweils zunächst in wenigstens einem Schritt als Antworttelegramm an einen den beiden Slaves übergeordneten Master und von dort als Aufruftelegramm in wenigstens einem Schritt an den anderen Slave gesendet wird und daß die Adresseninformation des vom einem Slave ausgesendeten Datentelegrammes zusätzlich zu einer Adresse des sendenden Slaves eine Adresse des als Empfänger bestimmten Slaves enthält.

2. Verfahren nach Anspruch 1,
**dadurch gekennzeichnet**,
daß wenigstens zwei Knotenstellen des Übertragungsnetzes jeweils sowohl Master einer eigenen Netzeinheit als auch Slave einer der Netzeinheit übergeordneten weiteren Netzeinheit sind und daß Datentelegramme, mit denen verschiedenen Netzeinheiten angehörende Slaves Informationen miteinander austauschen, schrittweise so lange als jeweiliges Antworttelegramm zum nächsten übergeordneten Master übertragen werden, bis ein Master erreicht ist, der beiden Slaves übergeordnet ist und daß das Datentelegramm von dort schrittweise als jeweiliges Aufruftelegramm von einer Knotenstelle zu einer dieser untergeordneten Knotenstelle bzw. von einer Knotenstelle zum weiteren Slave übertragen wird.

3. Verfahren nach Anspruch 1 oder 2,
**dadurch gekennzeichnet**,
daß die Adresseninformation des Datentelegrammes eine Folge von Adressen enthält, die den Übertragungsweg des Datentelegrammes bestimmt und daß in den Knotenstellen aus der Adressenfolge jeweils eine der Adressen durch eine Zusatzinformation zur aktuellen Zieladresse bestimmt wird.

4. Verfahren nach einem der Ansrüche 1 bis 3,
**dadurch gekennzeichnet**,
daß jeweils den Ports der Knotenstellen und Endstellen des Übertragungsnetzes eine Adresse zugeordnet ist und daß die Adresseninformation jeweils eine Portadresseninformation enthält und mit einer Zusatzinformation versehen ist, die jeweils in den auf dem Übertragungsweg liegenden Knotenstellen aktualisiert wird und daß die Portadresseninformation die Adressen der sich auf dem Übertragungsweg des Datentelegrammes befindlichen Ports und die auf die Übertragungsrichtung bezogene Reihenfolge der Ports auf dem Übertragungsweg umfaßt und daß mit Hilfe der Zusatzinformation eine der in der Portadresseninformation enthaltenen Portadressen nach der anderen in der vorgegebenen Reihenfolge zur aktuellen Zielportadresse bestimmt wird, daß die Portadresse des auf dem Übertragungsweg des Datentelegrammes liegenden Ports, der dem beiden Slaves übergeordneten Master angehört, in der Portadressenfolge zweimal aufeinanderfolgend enthalten ist.

5. Verfahren nach einem der Ansprüche 1 bis 4,
**dadurch gekennzeichnet**,
daß die Reihenfolge, in der die Portadressen auf dem Übertragungsweg zur Zielportadresse bestimmt werden, durch eine Zusatzinformation vorgegeben ist, die der Übertragungsrichtung entspricht und die portadressenfolge ergänzt.

6. Verfahren nach einem der Ansprüche 1 bis 5,
**dadurch gekennzeichnet**,
daß eine weitere Zusatzinformation, die auf dem Übertragungsweg unverändert bleibt, auf die letzte Portadresse der Portadressenfolge zeigt.

7. Verfahren nach einem der Ansprüche 1 bis 6,
**dadurch gekennzeichnet**,
daß die Zusatzinformation und/oder die weitere Zusatzinformation durch wenigstens ein einer Folge von Portadreßbytes vorangestelltes Byte gebildet ist, das auf eines der Portadreßbytes zeigt.

8. Verfahren nach einem der Ansprüche 1 bis 6,
**dadurch gekennzeichnet**,
daß die Portadressen in eigenen Portadreßbytes enthalten sind, die jeweils ein Erweiterungsbit für die Zusatzinformation und/oder ein Erweiterungsbit für die weitere Zusatzinformation enthalten.

9. Verfahren nach einem der Ansprüche 1 bis 8,
**dadurch gekennzeichnet**,
daß in der Portadressenfolge die Portadressen zunächst entsprechend der Übertragungsrichtung geordnet sind und daß die Adresse des Ports der als Empfänger bestimmten Teilnehmerstelle mit einem Zusatzbit versehen ist und daß auf dem Übertragungsweg die Portadressenfolge jeweils so umgestellt wird, daß sich an die dem verbleibenden Teil des Übertragungsweges entsprechende portadressenfolge eine weitere Portadressenfolge anschließt, die die Portadressen des vom Datentelegramm bereits durchlaufenen Teiles des Übertragungsweges in der der Rückrichtung entsprechenden Reihenfolge enthält.

10. Verfahren nach Anspruch 9,
**dadurch gekennzeichnet**,
daß in der Portadressenfolge die Adresse des Ports der den Absender bildenden Teilnehmerstelle mit einem Zusatzbit versehen ist.

## Claims

1. Method for transmitting data telegrams between subscriber stations of a data transmission system via at least one network unit of a transmission network, in which a processor unit operated as master exchanges information with processor units operated as slaves via a multipoint connection in such a way that polling telegrams of the master and response telegrams of the slaves alternate with one another in polling cycles and response cycles, the data telegrams being provided in each case with address information, which in the case of a polling telegram contains an address of the slave polled and in the case of a response telegram contains an address of the sending slave, characterized in that a data telegram to be transmitted from one slave to another slave is sent in each case initially in at least one step as a response telegram to a master superordinate to both the slaves, and is sent from there as a polling telegram in at least one step to the other slave, and in that the address information of the data telegram transmitted by one slave contains, in addition to an address of the sending slave, an address of the slave designated as receiver.

2. Method according to Claim 1, characterized in that at least two nodes of the transmission network are in each case both master over their own network unit and also slave of a further network unit superordinate to the network unit, and in that data telegrams, with which slaves belonging to various network units exchange information with each other, are transmitted step-by-step to the next superordinate master as a respective response telegram until a master that is superordinate to both slaves is reached, and in that the data telegram is transmitted from there step-by-step as a respective polling telegram from one node to a node subordinate thereto, or from a node to the further slave.

3. Method according to Claim 1 or 2, characterized in that the address information of the data telegram contains a string of addresses which designates the transmission path of the data telegram, and in that in the nodes, in each case one of the addresses from the address string is designated to be the current destination address by means of additional information.

4. Method according to one of Claims 1 to 3, characterized in that an address is assigned in each case to the ports of the nodes and terminal stations of the transmission network, and in that in each case the address information contains port address information and is provided with additional information which is updated in each case in the nodes lying on the transmission path, and in that the port address information includes the addresses of the ports situated on the transmission path of the data telegram and the sequence of the ports on the transmission path with respect to the transmission direction, and in that with the aid of the additional information, one after the other in the predetermined sequence, one of the port addresses contained in the port address information is designated to be the current destination port address, and in that the port address of the port which belongs to the master superordinate to both slaves and which is lying on the transmission path of the data telegram is contained twice in succession in the port address string.

5. Method according to one of Claims 1 to 4, characterized in that the sequence in which the port addresses on the transmission path are designated to be the destination port address is predetermined by additional information which corresponds to the transmission direction and supplements the port address string.

6. Method according to one of Claims 1 to 5, characterized in that further additional information, which remains unchanged on the transmission path, points to the last port address of the port address string.

7. Method according to one of Claims 1 to 6, characterized in that the additional information and/or the further additional information is formed by at least one byte which is prefixed to a string of port address bytes and points to one of the port address bytes.

8. Method according to one of Claims 1 to 6, characterized in that the port addresses are contained in separate port address bytes which contain in each case a supplementary bit for the additional information and/or a supplementary bit for the further additional information.

9. Method according to one of Claims 1 to 8, characterized in that the port addresses are initially ordered in the port address string in accordance with the transmission direction, and in that the address of the port of the subscriber station designated as receiver is provided with an additional bit, and in that in each case the port address string is altered on the transmission path in such a way that a further port address string follows on from the port address string corresponding to the remaining part of the transmission path, which further port address string contains the port addresses of the part of the transmission path over which the data telegram has already passed in the sequence corresponding to the return direction.

10. Method according to Claim 9, characterized in that in the port address string the address of the port of the subscriber station constituting the sender is provided with an additional bit.

## Revendications

1. Procédé pour transmettre des télégrammes de données entre des postes d'abonnés d'une installation de transmission de données par l'intermédiaire d'au moins une unité de réseau d'un réseau de transmission, dans laquelle une unité à processeur fonctionnant en tant que maître échange, par l'intermédiaire d'une liaison multipoints, des informations avec des unités à processeur fonctionnant en tant qu'esclaves, en faisant se succéder, lors de cycles d'appel et de réponse, des télégrammes d'appel du maître et des télégrammes de réponse des esclaves, les télégrammes de données étant chacun muni d'une information d'adresse, qui contient, dans le cas d'un télégramme d'appel, une adresse de l'esclave appelé et dans le cas d'un télégramme de réponse, une adresse de l'esclave émetteur,
caractérisé en ce que
l'on émet un télégramme de données à transmettre par un esclave à un autre esclave d'abord pendant au moins une étape en tant que télégramme de réponse à un maître de rang supérieur à celui des deux esclaves et à partir de cet endroit, en tant que télégramme d'appel pendant au moins une étape, à l'autre esclave et l'information d'adresse du télégramme de données émis par un esclave contient, en plus d'une adresse de l'esclave émetteur, une adresse de l'esclave déterminé comme récepteur.

2. Procédé suivant la revendication 1,
caractérisé en ce que
au moins deux postes situés en des noeuds du réseau de transmission sont chacun à la fois maître d'une unité de réseau qui leur est propre et esclave d'une autre unité de réseau de rang supérieur à cette unité de réseau, et l'on transmet des télégrammes de données, par lesquels des esclaves appartenant à des unités de réseaux différentes, échangent des informations entre eux, par étapes en tant que télégrammes de réponse au maître de rang immédiatement supérieur, jusqu'à ce qu'un maître ayant un rang supérieur à celui des deux esclaves, soit atteint et l'on transmet à partir de cet endroit le télégramme de données par étapes en tant que télégramme de réponse d'un poste de noeud à un poste de noeud de rang inférieur au sien ou d'un poste de noeud à l'autre esclave.

3. Procédé suivant la revendication 1 ou 2,
caractérisé en ce que
l'information d'adresse du télégramme de données contient une succession d'adresses, qui détermine le chemin de transmission du télégramme de données et l'on détermine, dans les postes de noeud, à partir de la succession d'adresses l'une des adresses par une information supplémentaire, comme l'adresse actuelle de destination.

4. Procédé suivant l'une des revendications 1 à 3,
caractérisé en ce que
il est associé respectivement aux ports des postes de noeuds et des postes terminaux du réseau de transmission une adresse, et l'information d'adresse contient une information d'adresse de port et est munie d'une information supplémentaire, que l'on actualise dans le poste de noeud se trouvant sur le chemin de transmission et l'information d'adresse de port comprend les adresses des ports se trouvant sur le chemin de transmission du télégramme de données et l'ordre des ports relatif à la direction de transmission sur le chemin de transmission et l'on détermine, à l'aide de l'information supplémentaire, l'une des adresses de ports contenue dans l'information d'adresse de port, après les autres dans l'ordre prescrit, comme l'adresse actuelle de port de destination et l'adresse du port, qui se trouve sur le chemin de transmission du télégramme de données et appartient au maître de rang supérieur à celui des deux esclaves, est comprise deux fois de suite dans la suite des adresses de ports.

5. Procédé suivant l'une des revendications 1 à 4,
caractérisé en ce que
l'ordre, dans lequel sont déterminées les adresses de ports sur le chemin de transmission, pour l'adresse de port de destination, est prescrit par une information supplémentaire, qui correspond à la direction de transmission et complète la suite des adresses de ports.

6. Procédé suivant l'une des revendications 1 à 5,
caractérisé en ce que
une autre information supplémentaire, qui reste inchangée sur le chemin de transmission, indique la dernière adresse de port de la suite d'adresses de ports.

7. Procédé suivant l'une des revendications 1 à 6,
caractérisé en ce que
l'information supplémentaire et/ou l'autre information supplémentaire sont formées d'au moins un octet placé en avant d'une suite d'octets d'adresse de port, qui indique l'un des octets d'adresse de port.

8. Procédé suivant l'une des revendications 1 à 6,
caractérisé en ce que
les adresses de ports sont comprises dans leurs propres octets d'adresse de port, qui comportent chacun un bit d'extension pour l'information supplémentaire et/ou un bit d'extension pour l'autre information supplémentaire.

9. Procédé suivant l'une des revendications 1 à 8,
caractérisé en ce que
dans la suite d'adresses de ports, les adresses de ports sont ordonnées d'abord suivant la direction de transmission, l'adresse du port du poste d'abonné déterminé en tant que récepteur est munie d'un bit supplémentaire, et on déplace, sur le chemin de transmission, la suite d'adresses de ports, de sorte que la suite d'adresses de ports correspondant à la partie restante du chemin de transmission est suivie par une autre suite d'adresses de ports, qui comprend les adresses de ports de la partie du chemin de transmission, qui a déjà été parcourue par le télégramme de données, dans l'ordre correspondant à la direction de retour.

10. Procédé suivant la revendication 9,
caractérisé en ce que
dans la suite d'adresses de ports, l'adresse du port du poste d'abonné, qui forme l'émetteur, est pourvue d'un bit supplémentaire.
